Europäisches Patentamt

European Patent Office

Office européen des brevets

(19)

(11)  **EP 1 023 827 B1**

(12)  **EUROPÄISCHE PATENTSCHRIFT**

(45) Veröffentlichungstag und Bekanntmachung des Hinweises auf die Patenterteilung:
**02.04.2003  Patentblatt 2003/14**

(51) Int Cl.⁷: **A01F 29/22**

(21) Anmeldenummer: **00100092.6**

(22) Anmeldetag: **07.01.2000**

(54)  **Verfahren zum Feststellen der Schärfe von Häckselmessern**

Method of monitoring the sharpness of chaff-cutting blades

Procédé pour déterminer l'acuité des lames de hacheuses

(84) Benannte Vertragsstaaten:
**DE FR GB**

(30) Priorität: **27.01.1999  DE 19903153**

(43) Veröffentlichungstag der Anmeldung:
**02.08.2000  Patentblatt 2000/31**

(73) Patentinhaber: **Case Harvesting Systems GmbH
01844 Neustadt (DE)**

(72) Erfinder: **Oliva, Christoph
88348 Bad Saulgau (DE)**

(74) Vertreter: **Müller, Lutz
Case Harvesting Systems GmbH,
Berghausstrasse 1
01844 Neustadt (DE)**

(56) Entgegenhaltungen:
**GB-A- 2 234 823        GB-A- 2 235 118
SU-A- 1 662 416        US-A- 5 196 800
US-A- 5 525 094        US-A- 5 571 956**

**Beschreibung**

Die Erfindung betrifft ein Verfahren zum Feststellen der Schärfe von Häckselmessern eines Feldhäckslers, die im Zusammenwirken mit einer feststehenden Gegenschneide zum Zerkleinern eines Erntegutstromes aus landwirtschaftlichen Erntegütern, wie Mais, Welkgut, Gras, Luzerne, Stroh, Sonderkulturen und dergleichen, forstwirtschaftlichen Kulturen und sogenannten nachwachsenden Rohstoffen eingesetzt werden, mit den Merkmalen nach dem Oberbegriff des Patentanspruches 1.

Die Schärfe der Häckselmesser ist bei Feldhäckslern neben der Einhaltung des empfohlenen Schneidspaltes zwischen den Häckselmessern und der Gegenschneide ausschlaggebend für die Qualität des Häckselgutes und den Energiebedarf des Feldhäckslers. Besonders wichtig ist dieser Zusammenhang bei den leistungsstarken selbstfahrenden Feldhäckslern.

Obwohl es inzwischen automatische Schleifeinrichtungen und automatische Verstelleinrichtungen für die Gegenschneide gibt, ist es bis heute noch Praxis, die Schärfe der Häckselmesser durch eine Sichtkontrolle zu beurteilen bzw.

nach vom Hersteller der Feldhäcksler empfohlenen Zeitintervallen die Häckselmesser nachzuschleifen und die Gegenschneide danach auf den empfohlenen Schneidspalt heranzustellen.

Bei der Sichtkontrolle ist von Nachteil, daß das entsprechende Erfahrungen der Bedienperson voraussetzt. Sind diese nicht vorhanden, führen Fehleinschätzungen zu einer sehr hohen Leistungsaufnahme und schlechter Häckselqualität beim verspäteten Nachschleifen und im umgekehrten Fall zu hohen Ausfallzeiten des Feldhäckslers, weil Sichtkontrollen nur bei Stillstand des Feldhäckslers ausgeführt werden können. Außerdem sind Sichtkontrollen zeitaufwendig, da die Häckselmesser schlecht zugänglich sind.

Durch diese schlechte Zugänglichkeit erhöht sich als weiterer Nachteil noch das Unfallrisiko für die Bedienperson.

Auch das Nachschleifen der Häckselmesser nach einem bestimmten Zeitintervall ist nachteilig, weil sich der Schärfezustand der Häckselmesser bei der Ernte unterschiedlicher Erntegüter und bei wechselndem Bestand ganz anders verändert, so daß entweder zu früh oder zu spät nachgeschliffen wird.

Mit den DD 286 735 A5, DD 286 736 A5 und DD 286 737 B5 sind Verfahren zum Feststellen der Schärfe von Häckselmessern während des betriebsgemäßen Einsatzes des Feldhäckslers bekannt geworden, die sogenannte schnelle Geber nach dem induktiven oder magnetischen Prinzip verwenden. Mit diesen Gebern sollte einmal die Länge der Schneidkante, der Zeitpunkt des Signalbeginns durch die Schneidkante der Häckselmesser bzw. die Signalkurve jedes Häckselmessers der Form nach für jedes Häckselmesser während des betriebsgemäßen Einsatzes erfaßt und mit einem abgespeicherten Wert für scharfe Häckselmesser verglichen werden. Bei Erreichen eines festgelegten Grenzwertes sollte dann die Bedienperson vom stumpfen Zustand der Häckselmesser durch ein entsprechendes Signal informiert werden bzw. die Schleifeinrichtung wird in Betriebsbereitschaft versetzt. Da allen drei Verfahren im Prinzip die gleichen Nachteile anhaften, ist bis heute auch keine praxisreife Lösung auf dem Markt erschienen. Diese Nachteile lagen einmal in der Ungenauigkeit der Meßwerte und zum anderen im hohen Kostenaufwand für die an der Meßwerterzeugung beteiligten Bauteile. Darüber hinaus war noch die Störanfälligkeit durch die komplizierten Einsatzbedingungen entschieden zu hoch.

Deshalb liegt der Erfindung die Aufgabe zugrunde, ein Verfahren zum Feststellen der Schärfe von Häckselmessern an einem Feldhäcksler zu schaffen, das während des betriebsgemäßen Einsatzes des Feldhäckslers aussagefähige Meßwerte für den Schärfezustand der Häckselmesser unabhängig von der Art und der Menge des gerade gehäckselten Erntegutes liefert, dessen an der Meßwerterzeugung beteiligten Bauteile kostengünstig in der Herstellung sind und die unter den komplizierten Einsatzbedingungen in der Landwirtschaft nur eine geringe Störanfälligkeit aufweisen.

Diese Aufgabe wird gemäß der Erfindung durch die Merkmale des 1. Patentanspruches gelöst, wobei in den Unteransprüchen Merkmale aufgeführt sind, die diese Lösung in vorteilhafter Weise weiterentwickeln.

Durch das Erfassen der Meßwerte $F_x$; $F_z$ für die Belastung der Gegenschneide bei scharfen Häckselmessern und bei Vorliegen des vorgeschriebenen Schneidspaltes wird die von der Schneidkante des Häckselmessers über das zu häckselnde Erntegut auf die Gegenschneide ausgeübte resultierende Kraft $F_s$ ermittelt. Da der Schneidspalt sehr klein ist, befindet sie sich annähernd in einer Richtung einer an den Rotationskreis des gerade schneidenden Häckselmessers gelegten Tangente. Das bedeutet, $F_x$ ist sehr klein und $F_z$ relativ groß. Bildet man aus diesen Meßwerten $F_x$; $F_z$ einen Quotienten $Q_{xz}$, bleibt dieser für alle Erntegutarten und für jede beliebige augenblicklich gehäckselte Erntegutmenge in der Größenordnung gleich. Dieser Quotient $Q_{xz}$ wird von einer Auswerteeinheit als Vergleichswert gespeichert.

Beim betriebsgemäßen Einsatz der Häckselmesser werden diese zunehmend stumpf, wobei sich ihre Schneidkanten immer mehr abrunden. Das hat zur Folge, daß sich die resultierende Kraft $F_s'$ immer mehr von der Tangente entfernt, weil der Meßwert $F_x'$ im Vergleich zum Meßwert $F_z'$ zunehmend größer wird. Dadurch ändert sich natürlich auch der aus beiden Meßwerten gebildete Quotient $Q_{xz}'$, der ebenso wie $Q_{xz}$ unabhängig von der Erntegutart und der gehäckselten Erntegutmenge in der Größenordnung im Augenblick der Messung gleich ist.

Damit ist es durch einen kontinuierlich oder in Intervallen mittels einer Auswerteeinheit durchgeführten Vergleich zwischen Qxz und Qxz' möglich, einen Schwellwert vorzugeben, bei dessen Erreichen die Häckselmesser nachzuschleifen und die Gegenschneide danach auf den vorgeschriebenen Schneidspalt heranzustellen ist.

Dafür hat es sich in einer einfachen Ausführungsvariante als zweckmäßig erwiesen, daß der Bedienperson von der Auswerteeinheit ein akustisches oder ein optisches Signal vermittelt wird.

In einer anderen Ausführungsvariante hat es sich bewährt, mit Erreichen des Schwellwertes zwangsläufig die Erntegutzufuhr zur Häckseltrommel zu stoppen. In einer weiteren bevorzugten Ausführungsvariante werden nach dem Stoppen der Erntegutzufuhr automatisch die Schleifeinrichtung für die Häckselmesser und die Verstelleinrichtung für die Gegenschneide in Gang gesetzt.

Zur Ermittlung der Meßwerte Fx; Fx'; Fz und Fz' bietet sich der Einsatz von Dehnungssensoren, Wegesensoren oder Schwingungssensoren an.

Mit dem erfindungsgemäßen Verfahren ist es einmal möglich, die Werte Qxz' über ein bestimmtes Zeitintervall zu integrieren, wobei der so gebildete Mittelwert Qxz' ein Maß für den Verschleißzustand aller Häckselmesser darstellt. Darüber hinaus kann das erfindungsgemäße Verfahren aber auch zum Feststellen des Verschleißzustandes einzelner Häckselmesser benutzt werden, wenn der aktuelle Qxz'-Wert jedes Häckselmessers mit dem Quotienten Qxz verglichen wird.

Vorsorglich wird noch darauf hingewiesen, daß das erfindungsgemäße Verfahren bei Feldhäckslern mit einer Häckseltrommel und bei den sogenannten Scheibenradhäckslern mit dem gleichen Erfolg angewendet werden kann, so daß sich der beanspruchte Schutz auf beide Feldhäckslertypen richtet.

Damit sind die Vorteile des erfindungsgemäßen Verfahrens, daß während des betriebsgemäßen Einsatzes des Feldhäckslers aussagefähige Meßwerte für die Schärfe einzelner oder aller Häckselmesser, unabhängig von der Art und der Menge des gerade gehäckselten Erntegutes, erzielt werden können. Damit sind subjektive Fehlerquellen einer Bedienperson durch Sichtkontrollen der Häckselmesser ausgeschlossen. Da das erfindunsgemäße Verfahren während des betriebsgemäßen Einsatzes arbeitet, gibt es auch keine unnötigen Stillstandszeiten für Sichtkontrollen.

Ein sehr wichtiger Vorteil ist, daß durch optimal scharfe Häckselmesser die Leistungsaufnahme zum Häckseln in Grenzen bleibt und die Häckselgutqualität überdurchschnittlich gut ist. Mit diesem Verfahren ist es vorteilhafterweise möglich, den Schärfezustand der Häckselmesser über deren gesamte Breite ohne zusätzliche Meßeinrichtungen festzustellen, wodurch unter anderem eine nach diesem Verfahren arbeitende Meßvorrichtung kostengünstig in der Herstellung ist. Schließlich haben sich die zum Aufbau einer derartigen Meßvorrichtung notwendigen Bauteile unter den rauhen Einsatzbedingungen der Land- und Forstwirtschaft bereits bewährt, so daß die notwendige Störunanfälligkeit gegeben ist.

Die Erfindung soll nun anhand eines Ausführungsbeispieles näher erläutert werden, das das erfindungsgemäße Verfahren verwirklicht und in dem die einzelnen Figuren zeigen:

Fig. 1      eine schematische Seitenansicht auf die linke Seite der Häckseltrommel mit Gegenschneide und Verstelleinrichtung

Fig. 2      eine Ansicht A nach Fig. 1

Fig. 3      einen Schnitt B-B nach Fig. 2

Fig. 4      eine vergrößerte Darstellung des Bereiches zwischen der Gegenschneide und einem scharfen Häckselmesser

Fig. 5      eine vergrößerte Darstellung des Bereiches zwischen der Gegenschneide und einem stumpfen Häckselmesser

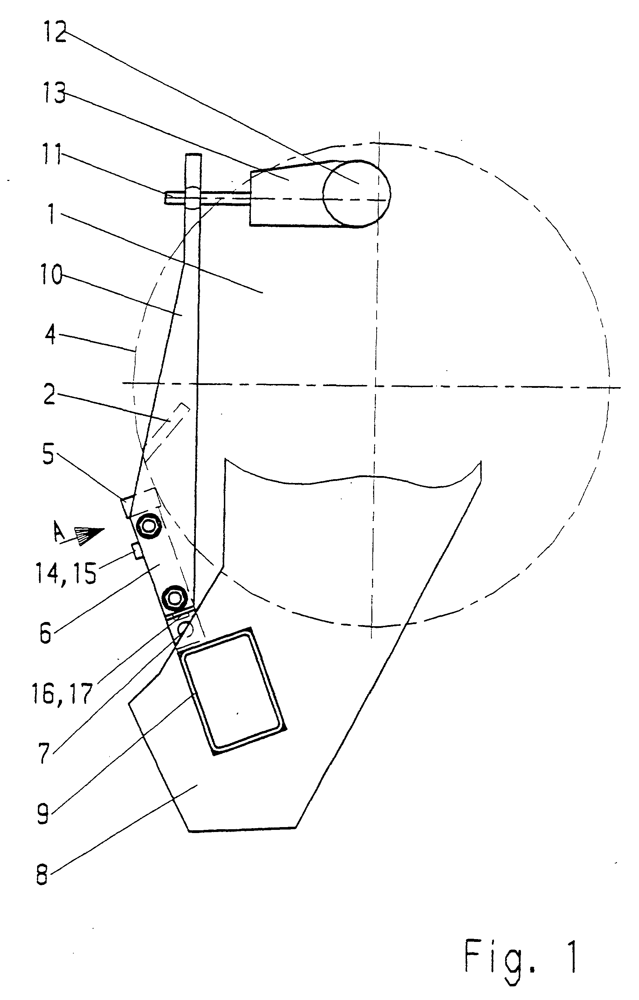

In Figur 1 ist die Häckseltrommel 1 als strichpunktierter Kreis dargestellt, die mit einer Vielzahl von Häckselmessern 2 ausgerüstet ist, von denen dort nur eines schematisch dargestellt ist. Dem von allen Schneidkanten 3 der Häckselmesser 2 gebildeten Rotationskreis 4 steht eine Gegenschneide 5 gegenüber, deren minimalster Abstand zu den Schneidkanten 3 der vorbeirotierenden Häckselmesser 2 allgemein als Schneidspalt bezeichnet wird. Die Gegenschneide 5 ist mittels Schrauben auf dem Gegenschneidenträger 6 befestigt, dessen unteres Ende mit Lagerungen 7 ausgestattet ist, die an einem im Häckselkasten 8 eingeschweißten Querträger 9 schwenkbeweglich aufgenommen sind. An den beiden Außenseiten des Gegenschneidenträgers 6 sind Schwenkhebel 10 angebracht, deren obere Enden mit Stellspindeln 11 von Stellmotoren 12 gelenkig verbunden sind und zusammen die Verstelleinrichtung 13 zur Veränderung des Schneidspaltes bilden.

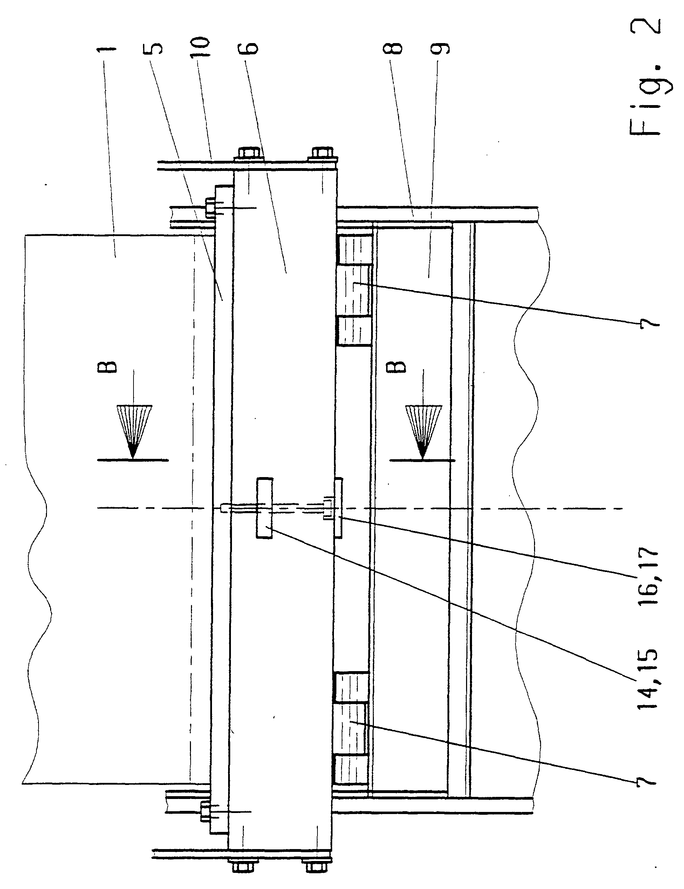

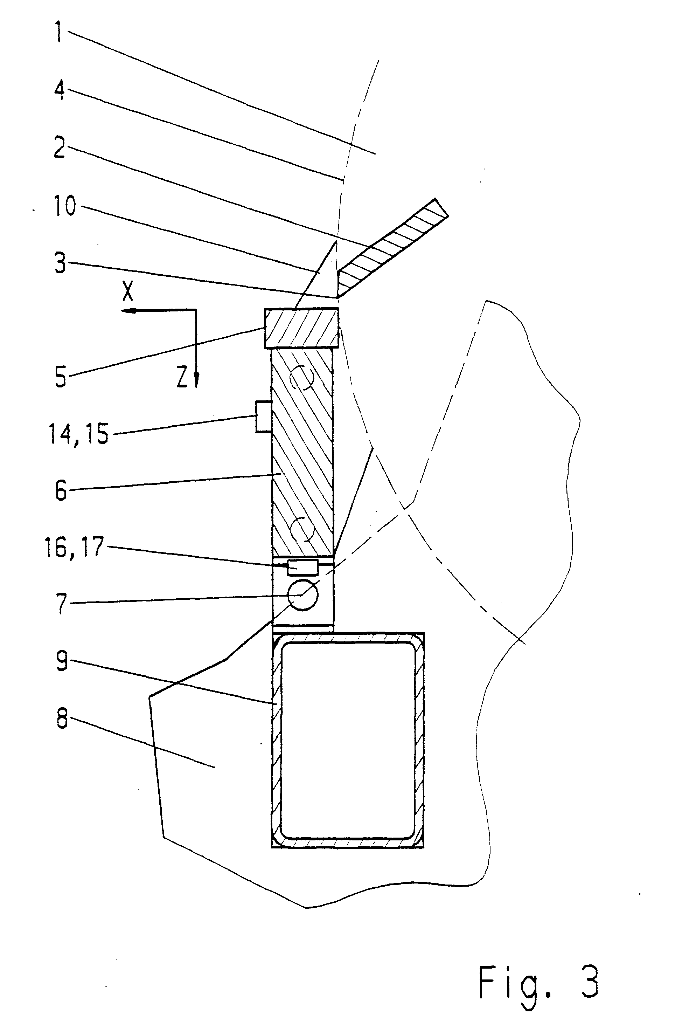

In den Figuren 1 bis 3 ist in Fahrtrichtung des Feldhäckslers gesehen an der Vorderseite des Gegenschneidenträgers 6 eine Meßeinrichtung 14 zum Messen der auf die Gegenschneide 5 einwirkenden Kräfte Fx; Fx' in x-Richtung vorgesehen. In diesem Ausführungsbeispiel ist die Meßeinrichtung 14 als Dehnungssensor 15 ausgebildet. Eine weitere Meßeinrichtung 16 ist an der Unterseite des Gegenschneidenträgers 6 befestigt, der zum Messen der auf die Gegenschneide 5 einwirkenden Kräfte Fz; Fz' in z-Richtung dient. Auch für diese Meßeinrichtung 16 kommt ein Dehnungssensor 17 zum Einsatz.

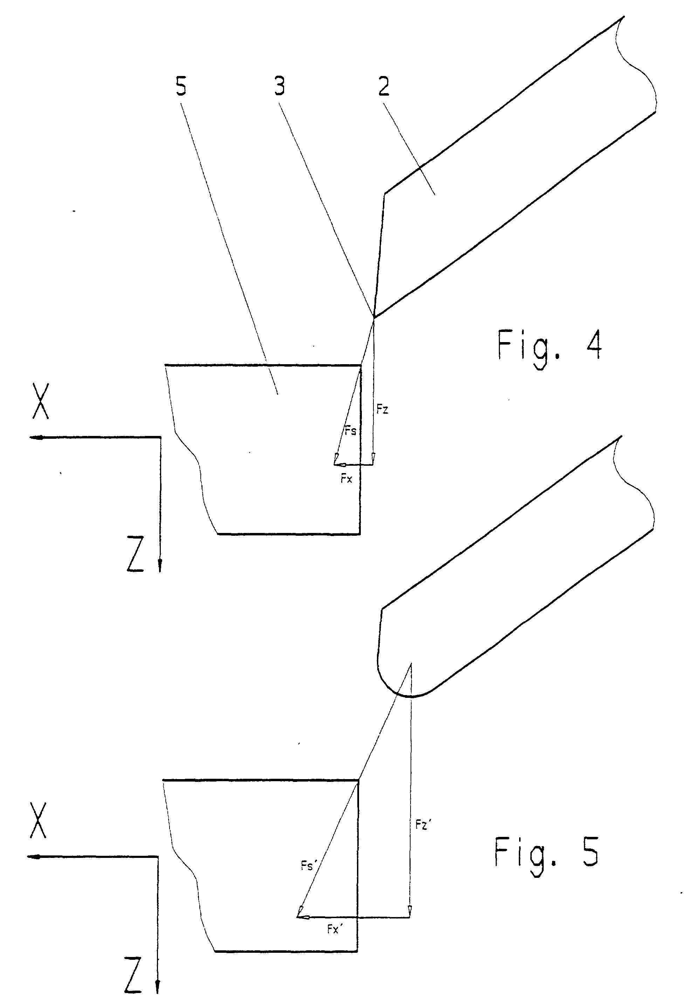

In den Figuren 4 und 5 ist die Krafteinwirkung eines Häckselmessers 2 auf die Gegenschneide 5 in der gleichen Ausgangsposition mit einer scharfen und einer stumpfen Schneidkante 3 dargestellt.

## Bezugzeichenaufstellung

| 1 | Häckseltrommel |
|---|---|
| 2 | Häckselmesser |
| 3 | Schneidkante |
| 4 | Rotationskreis |
| 5 | Gegenschneide |
| 6 | Gegenschneidenträger |
| 7 | Lagerung |
| 8 | Häckselkasten |
| 9 | Querträger |
| 10 | Schwenkhebel |
| 11 | Stellspindel |
| 12 | Stellmotor |
| 13 | Verstelleinrichtung |
| 14 | Meßeinrichtung |
| 15 | Dehnungssensor |
| 16 | Meßeinrichtung |
| 17 | Dehnungsensor |
| Fx | Meßwert für scharfe Häckselmesser in x-Richtung |
| Fz | Meßwert für scharfe Häckselmesser in z-Richtung |
| Fs | vom Häckselmesser auf die Gegenschneide ausgeübte Kraft bei scharfen Häckselmessern |

$$Qxz = \frac{Fx}{Fz} \text{ oder } \frac{Fz}{Fx}$$

| Fx' | Meßwert für stumpf werdende Häckselmesser in x-Richtung |
|---|---|
| Fz' | Meßwert für stumpf werdende Häckselmeser in z-Richtung |
| Fs' | vom Häckselmesser auf die Gegenschneide ausgeübte Kraft bei stumpf werdenden Häckselmessern |

$$Qxz' = \frac{Fx'}{Fz'} \text{ oder } \frac{Fz'}{Fx'}$$

## Patentansprüche

1. Verfahren zum Feststellen der Schärfe der Häckselmesser eines Feldhäckslers während des betriebsgemäßen Einsatzes, wobei die Häckselmesser den zwischen ihnen und der feststehenden Gegenschneide hindurchgleitenden Erntegutstrom in Stücke vorwählbarer Länge zerkleinern, **gekennzeichnet durch** folgende Verfahrensschritte:

   a) bei scharfen Häckselmessern (2) und bei Vorliegen des empfohlenen Schneidspaltes zwischen der Gegenschneide (5) und den Häckselmessern (2) wird von einer geeigneten Meßeinrichtung (14) ein Meßwert (Fx) erfaßt, der ein Maß für die Belastung der Gegenschneide (5) entgegen der Flußrichtung des Erntegutstromes ist,
   b) bei scharfen Häckselmessern (2) und bei Vorliegen des empfohlenen Schneidspaltes zwischen der Gegenschneide (5) und den Häckselmessern (2) wird von einer geeigneten Meßeinrichtung (16) ein Meßwert (Fz) erfaßt, der ein Maß für die Belastung der Gegenschneide (5) quer zur Flußrichtung des Erntegutstromes ist,
   c) eine Auswerteeinheit bildet aus den Meßwerten (Fx; Fz) einen Quotienten (Qxz) und speichert diesen als Vergleichswert,
   d) kontinuierlich oder in Intervallen wird der sich betriebsgemäß ändernde Quotient (Qxz') ermittelt und mit dem als Vergleichswert dienenden Quotienten (Qxz) verglichen,
   e) die Auswerteeinheit signalisiert das Erreichen bzw. das Überschreiten eines Schwellwertes aus dem Vergleich zwischen den Quotienten (Qxz) und (Qxz').

2. Verfahren nach Anspruch 1, **dadurch gekennzeichnet, daß** zur Ermittlung der Meßwerte (Fx; Fx') und (Fz; Fz') Dehnungssensoren (15;17) zur Messung der Belastung der Gegenschneide (5) und/oder des Gegenschneidenträgers (6) verwendet werden.

3. Verfahren nach Anspruch 1, **dadurch gekennzeichnet, daß** zur Ermittlung der Meßwerte (Fx; Fx') und Fz; Fz') Wegesensoren zur Messung der Belastung der Gegenschneide (5) und/oder des Gegenschneidenträgers (6) verwendet werden.

4. Verfahren nach Anspruch1, **dadurch gekennzeichnet, daß** zur Ermittlung der Meßwerte (Fx;Fx') und (Fz;Fz') Schwingungssensoren eingesetzt werden.

5. Verfahren nach den Ansprüchen 1 bis 4, **dadurch gekennzeichnet, daß** kontinuierlich oder in Intervallen der Quotient (Qxz') für jedes Häckselmesser (2) ermittelt und mit dem als Vergleichswert dienenden Quotienten (Qxz) einzeln verglichen wird, wobei die Auswerteeinheit das Erreichen bzw. das Überschreiten eines Schwellwertes aus dem Vergleich zwischen den Quotienten (Qxz) und (Qxz') signalisiert.

6. Verfahren nach den Ansprüchen 1 bis 5, **dadurch gekennzeichnet, daß** die Werte des Quotienten (Qxz') über ein bestimmtes Zeitintervall integriert werden.

7. Verfahren nach den Ansprüchen 1 bis 6, **dadurch**

**gekennzeichnet, daß** bei Erreichen bzw. Überschreiten eines Schwellwertes aus dem Vergleich zwischen den Quotienten (Qxz) und (Qxz') der Bedienperson ein optisches oder akustisches Signal vermittelt wird.

8. Verfahren nach den Ansprüchen 1 bis 6, **dadurch gekennzeichnet, daß** bei Erreichen bzw. Überschreiten eines Schwellwertes aus dem Vergleich zwischen den Quotienten (Qxz) und (Qxz') die weitere Erntegutzufuhr zur Häckseltrommel (1) gestoppt wird.

9. Verfahren nach den Ansprüchen 1 bzw. 6 und 8, **dadurch gekennzeichnet, daß** bei Erreichen bzw. Überschreiten eines Schwellwertes aus dem Vergleich zwischen den Quotienten (Qxz) und (Qxz') automatisch die Schleifeinrichtung für die Häckselmesser (2) und/oder die Verstelleinrichtung (13) für die Gegenschneide (5) in Betrieb gesetzt werden.

## Claims

1. A procedure for determining the sharpness of the chopping blades of a forage harvester during operational deployment, in which the chopping blades cut up the stream of harvested crop passed between them and a fixed counter-cutting blade into pieces of preselected length, **characterised by** the following procedural steps:

    a) for sharp chopping blades (2) and with the existence of the recommended cutting gap between the counter-cutting blade (5) and the chopping blades (2) a measured value (Fx) is recorded, which is a measure of the loading of the counter-cutting blade (5) against the direction of flow of the stream of harvested crop,
    b) for sharp chopping blades (2) and with the existence of the recommended cutting gap between the counter-cutting blade (5) and the chopping blades (2) a measured value (Fz) is recorded, which is a measure of the loading of the counter-cutting blade (5) transverse to the direction of flow of the stream of harvested crop,
    c) an evaluation unit forms a quotient (Qxz) from the measurements (Fx; Fz) and stores this as a comparative value,
    d) continuously or at intervals, the quotient (Qxz'), which varies during operation, is determined and compared with the quotient (Qxz) serving as the comparative value,
    e) the evaluation unit signals the attaining or exceeding of a threshold value from the comparison between the quotients (Qxz) and (Qxz').

2. A procedure in accordance with claim 1, **characterised in that**, for the determination of the measurements (Fx; Fx') and (Fz; Fz') strain sensors (15; 17) are employed for measuring the loading of the counter-cutting blade (5) and/or the counter-cutting blade support (6).

3. A procedure in accordance with claim 1, **characterised in that**, for determining the measurements (Fx; Fx') and Fz; Fz') position sensors are employed for measuring the loading of the counter-cutting blade (5) and/or the counter-cutting blade support (6).

4. A procedure in accordance with claim 1, **characterised in that**, for determining the measurements (Fx; Fx') and (Fz; Fz') vibration sensors are employed.

5. A procedure in accordance with claims 1 to 4, **characterised in that**, continuously or at intervals the quotient (Qxz') is determined for each chopping blade (2) and is compared individually with the quotient (Qxz) serving as a comparative value, in which the evaluation unit signals the attainment or exceeding of a threshold value from the comparison between the quotients (Qxz) and Qxz').

6. A procedure in accordance with claims 1 to 5, **characterised in that**, the value of the quotient (Qxz') is integrated over a certain interval of time.

7. A procedure in accordance with claims 1 to 6, **characterised in that**, on the attainment or exceeding of a threshold value from the comparison between the quotients (Qxz) and (Qxz') an optical or acoustic signal is passed to the operator.

8. A procedure in accordance with claims 1 to 6, **characterised in that**, on the attainment or exceeding of a threshold value from the comparison between the quotients (Qxz) and (Qxz') the further supply of harvested crop to the chopper drum (1) is stopped.

9. A procedure in accordance with claims 1, 6 and 8 respectively, **characterised in that**, on the attainment or exceeding of a threshold value from the comparison between the quotients (Qxz) and (Qxz'), the grinding device for the chopping blades (2) and/or the adjusting device (13) for the counter-cutting blade (5) is automatically put into operation.

## Revendications

1. Procédé pour la détermination de l'acuité des hache-paille d'une récolteuse-hacheuse chargeuse de fourrage pendant l'utilisation conforme à l'exploitation, les hache-paille déchiquetant le flux de produits de récolte passant entre les hache-paille et les contre-couteaux fixes en sections de longueur sélectionnable, **caractérisé par** les étapes de procédé suivantes :

a) pour des hache-paille affûtés (2) et en cas de présence de l'intervalle de coupe recommandé entre le contre-couteau (5) et les hache-paille (2), une valeur de mesure (Fx) est détectée par un dispositif de mesure approprié (14). Cette valeur de mesure est une mesure de la contrainte des contre-couteaux (5) en opposition au sens d'écoulement du flux du produit de récolte,

b) pour des hache-paille affûtés (2) et en cas de présence de l'intervalle de coupe recommandé entre le contre-couteau (5) et les hache-paille (2), une valeur de mesure (Fz) est détectée par un dispositif de mesure approprié (16) ; cette valeur est une mesure de la contrainte du contre-couteau (5) transversalement par rapport au sens d'écoulement du flux du produit de récolte,

c) une unité d'exploitation forme, à partir des valeurs de mesure (Fx; Fz), un quotient (Qxz) et mémorise celui-ci comme valeur de comparaison,

d) de manière continue ou par intervalles, le quotient (Qxz'), qui fluctue selon l'exploitation, est déterminé et comparé au quotient (Qxz) servant de valeur de comparaison,

e) l'unité d'exploitation signale l'atteinte et le dépassement d'une valeur de seuil à partir de la comparaison entre les quotients (Qxz) et (Qxz').

2. Procédé selon la revendication 1, **caractérisé en ce que** pour déterminer les valeurs de mesure (Fx; Fx') et (Fz; Fz'), des extensomètres (15;17) sont utilisés pour la mesure de la contrainte des contre-couteaux (5) et/ou du support de contre-couteau (6).

3. Procédé selon la revendication 1, **caractérisé en ce que** pour déterminer les valeurs de mesure (Fx; Fx') et (Fz; Fz'), des capteurs de trajet sont utilisés pour la mesure de la contrainte des contre-couteaux (5) et/ou du support de contre-couteau (6).

4. Procédé selon la revendication 1, **caractérisé en ce que** pour déterminer la valeur de mesure (Fx; Fx') et (Fz; Fz'), des capteurs de vibrations sont utilisés.

5. Procédé selon les revendications 1 à 4, **caractérisé en ce que** de manière continue ou par intervalles, le quotient (Qxz') pour chaque hache-paille (2) est déterminé et est comparé au quotient (Qxz) servant de valeur de mesure, l'unité d'exploitation signalant l'atteinte et le dépassement d'une valeur de seuil à partir d'une comparaison entre les quotients (Qxz) et (Qxz').

6. Procédé selon les revendications 1 à 5, **caractérisé en ce que** les valeurs du quotient (Qxz') sont intégrées sur un intervalle de temps défini.

7. Procédé selon les revendications 1 à 6, **caractérisé en ce que** lors de l'atteinte et du dépassement d'une valeur de mesure à partir de la comparaison entre les quotients (Qxz) et (Qxz'), l'opérateur perçoit un signal optique ou acoustique.

8. Procédé selon les revendications 1 à 6, **caractérisé en ce que** lors de l'atteinte et du dépassement d'une valeur de seuil à partir de la comparaison entre les quotients (Qxz) et (Qxz'), l'amenée ultérieure des produits de récolte en direction du tambour hacheur (1) est arrêtée.

9. Procédé selon les revendications 1, 6 et 8, **caractérisé en ce que** pour l'atteinte et le dépassement d'une valeur de seuil à partir de la comparaison entre les quotients (Qxz) et (Qxz'), le dispositif d'affûtage pour les hache-paille (2) et/ou le dispositif de réglage (13) pour le contre-couteau (5) sont mis en service automatiquement.

Fig. 1

Fig. 2

EP 1 023 827 B1

Fig. 3

5   3   2

Fig. 4

X

Fz

Fs

Z

Fx

Fig. 5

X

Fz'

Fs'

Z

Fx'